# EUROPEAN PATENT APPLICATION

(11) **EP 4 485 239 A1**
(43) Date of publication of application: **01.01.2025**
(21) Application number: 23182272.7
(22) Date of filing: 29.06.2023
(51) Int. Cl.: G06F 21/44, G06F 21/64

(54) **QUALITY DEPENDENT HANDLING OF A DEVELOPED SOFTWARE**

(71) Applicant: Deutsche Telekom AG, 53113 Bonn (DE)
(72) Inventor: RENKEN, Matthias, 28357 Bremen (DE); ALBRECHT, Robert Manfred, 26131 Oldenburg (DE)
(74) Representative: RDL Patentanwälte PartG mbB

(57) **Abstract**

A method for assuring a property of a software, wherein a software signature server verifies a property indicator of a developed software, and, upon successfully verifying the property indicator, generates a digital signature of the verified property indicator by encrypting the verified property indicator with an encryption key created and provided by a trusted entity and assigns the generated digital signature to the verified property indicator; and the software signature server transmits an executable version of the developed software and a manifest file linked to the executable version, the manifest file comprising the property indicator and the assigned digital signature assuring a property of the developed software indicated by the property indicator, and a computer program product.

## Description

The invention relates to a method for handling a software, wherein a software signature server verifies a property indicator of a developed software, and, upon successfully verifying the property indicator, generates a digital signature of the verified property indicator by encrypting the verified property indicator with an encryption key created and provided by a trusted entity and assigns the generated digital signature to the verified property indicator; and the software signature server transmits an executable version of the developed software and a manifest file linked to the executable version, the manifest file comprising the property indicator and the assigned digital signature assuring a property of the developed software indicated by the property indicator. The invention further relates to a computer program product.

The software comprises a source code developed, i.e. written, by a software programmer or by a plurality of software programmers. The source code is translated into the executable version of the developed software by means of a compiler. Alternatively the source code is the executable version of the developed software to be executed by an interpreter. The property indicator is assigned to the software by a software development company and indicates a property of the developed software, the property qualifying the developed software. The property indicator is specified by a manifest file. The manifest file is linked to the executable version and allows for checking wether the developed software has a determined property or not.

A handling of the software may depend on the property. Thus, the manifest file may control the handling of the software, particularly the handling of the executable version. The property dependent handling indeed may appear to be a drawback as it substantially limits a usage of the software. However, any limitation may, on the other hand, result in an increased security when using the software. The increased security may be beneficial to and appreciated by a user of the software.

The increased security requires the property indicator to be authentic, i.e., an unnoticed subsequent manipulation of the property indicator has to be prevented. Authenticity of the property indicator is usually achieved by digitally signing the property indicator. The digital signature of the property indicator is generated by a software signature server of the software development company encrypting the property indicator with an encryption key. Any subsequent manipulation of the property will result in a noticeable discrepancy between the generated digital signature and the subsequently manipulated property indicator.

A name of the software development company, i.e., the issuer of the developed software is a property indicator which actually may be used by an application server. The application server may be configured for executing the executable version of the developed software if and only if the software has been issued by a trusted software development company. However, this limitation is very basic with regard to both the type of handling and the property of the software.

It is, therefore, an object of the invention to suggest a method for handling a software which allows for controlling different types of handling and/or for assuring different properties of the software. Another object of the invention is to provide a computer program product.

An aspect of the invention is a method for handling a software, wherein a software signature server verifies a property indicator of a developed software, and, upon successfully verifying the property indicator, generates a digital signature of the verified property indicator by encrypting the verified property indicator with an encryption key created and provided by a trusted entity and assigns the generated digital signature to the verified property indicator; and the software signature server transmits an executable version of the developed software and a manifest file linked to the executable version, the manifest file comprising the property indicator and the assigned digital signature assuring a property of the developed software indicated by the property indicator. The manifest file comprises at least one signed property indicator. The manifest file comes with the executable version of the developed software and may be used for deciding on how to handle the executable version. The link between the executable version and the manifest file may be provided by generating a digital signature of the executable version and adding the generated digital signature to the manifest file.

According to the invention, a software delivery server, upon reception of the transmitted manifest file, evaluates the manifest file and handles the transmitted executable version according to a software handling rule depending on the property indicator and the assigned digital signature. The software delivery server is different from an application server and may be used to deliver the developed software to an application server, i.e., to distribute the transmitted developed software. The software delivery server, hence, applies a different type of handling to the developed software as compared to a type of handling applied by an application server.

Generating the digital signature preferably comprises encrypting a value of a property key-value pair with the provided encryption key, the property key-value pair indicating the property of the developed software. The property key-value pair is a simple way for indicating a property. The key of the key-value pair indicates a name of the property while the value of the key-value pair indicates a manifestation of the property, i.e., a concrete characteristic of the property.

Assigning the generated digital signature may comprise providing the value of the property key-value pair with a leading additional signature key-value pair, the leading additional signature key-value pair comprising the generated digital signature as a value. In other words, the digital signature is incorporated in the manifest file by means of the additional signature key-value pair. The additional signature key-value pair may comprise a name specifying a coding of the digital signature, e.g., "dgst_sha256_base64", and a character string representing the digital signature forming the value of the signature key-value pair.

In an embodiment, handling the transmitted executable version comprises either restricting a delivery of the executable version to a platform or rejecting a delivery of the executable version when the digital signature is missing or does not match the property indicator or when the property indicator is missing or unacceptable and/or providing a warning message indicating the missing digital signature, the property indicator not matched and/or the missing or unacceptable property indicator. The listed handling options correspond to different software handling rules. The handling of the executable version may depend on an existence of the property indicator or on the digital signature thereof or on an authenticity of the property indicator or on the manifestation thereof. The handling options may comprise a free delivery, a restricted delivery, the restriction depending on the property indicator, or no delivery at all. Of course, both the handling options and the dependence from the manifest file are exemplary and not exhaustive.

The trusted entity may provide an application server with the generated encryption key; the software delivery server may transmit the executable version and the manifest file to the application server; and the application server, upon reception of the transmitted manifest file, may evaluate the manifest file and handle the transmitted executable version according to a software handling rule depending on the property indicator and the assigned digital signature. The software handling rule applied to the manifest file by the application server may be different from the software handling rule applied to the manifest file by the software delivery server. The first ones may be provided by a first company unit while the latter ones may be provided by a second company unit in order to implement a separation of concern.

In an embodiment, handling the executable version comprises either executing the executable version or restricting an execution of the executable version or rejecting an execution of the executable version when the digital signature is missing or does not match the property indicator or when the property indicator is missing or unacceptable and/or providing a warning message indicating the missing digital signature, the property indicator not matched and/or the missing or unacceptable property indicator. The listed handling options correspond to different software handling rules. The handling of the executable version may depend on an existence of the property indicator or on the digital signature thereof or on an authenticity of the property indicator or on the manifestation thereof. The handling options may comprise a free execution, a restricted execution, the restriction depending on the property indicator, or no execution at all. Of course, both the handling options and the dependence on the manifest file are exemplary and not exhaustive.

A development parameter, a quality parameter, a legal parameter, a secrecy level parameter, an organization parameter, a platform parameter, a runtime environment parameter and/or a location parameter may be digitally signed as the property indicator. Concrete manifestations of the quality parameter may comprise "ISO 9000", "Code Scan yes/no", "Virus Scan yes/no", "ISO/IEC 9126", "Capability Maturity Model Integration, CMMI, level". Concrete manifestations of the development parameter may comprise a compiler version, an interpreter version. Concrete manifestations of the legal parameter may comprise "EU DSGVO Validity", "EMEA", "Privacy Shield". Concrete manifestations of the secrecy level parameter may comprise "pubic", "internal", "confidential", "secret". Concrete manifestations of the organization parameter may comprise levels of a continuous integration, continuous delivery/deployment, CICD, pipeline. Concrete manifestations of the platform parameter may comprise "cloud", "client". Concrete manifestations of the runtime environment parameter may specify operating systems or archives and comprise "ELF", "PE", "JAVA", "DOCKER", "MACH-O", "MSI", "APK". The listed parameters and the manifestations thereof are exemplary and not exhaustive. The plurality of parameters allows for differentiating respective handling options.

Preferably, an asymmetric key pair comprising a public key and a private key is created and provided as the encryption key. The public key is known to and used by the software signature server for encrypting the property indicator. The private key is known to and used by the software delivery server and optionally by the application server for decrypting the digital signature.

A binary file, a runtime archive or a source code is preferably transmitted as the executable version. The binary file may be immediately executed by an operating system. The runtime archive may be executed by virtual machine, e.g., JAVA, executed by an operating system. The source file may be executed by an interpreter, e.g. PYTHON, executed by an operation system.

Particularly, an XML, eXtensible Markup Language, file or a JSON, JavaScript Object Notation, file may be linked to the executable version as the manifest file. Both the XML file and the JSON file are file formats to create and to read easily. Of course, the listed formats of the manifest file are exemplary and not exhaustive.

Evaluating the manifest file advantageously comprises verifying a validity of the digital signature and a validity of the trusted entity having created and provided the digital signature. The invalidity of the digital signature or the trusted entity may be met by rejecting any handling option.

In an embodiment, a plurality of digital signatures is generated and individually assigned to a plurality of property indicators and/or the transmitted executable version is handled depending on a plurality of software handling rules. In other words, each property indicator is signed on its own and independently, particularly using different encryption keys, in a high security of the assured properties of the developed software. The software handling rules allow for a differentiated coverage of possible handling options.

The application server may provide a signed platform token and transmit the provided signed platform token to the software signature server, the property indicator comprising the transmitted signed platform token and the signed platform token specifying a platform property. The signed platform token securely restricts the execution of the executable version to the application server.

Particularly, a software development server or a quality control server participates as the software signature server and/or a certificate server of a certificate authority or a hardware security module, HSM, creates and provides the encryption key as the trusted entity. The software signature server may be integrated with or separate from the software development server used by software programmers for developing the software. With the integrated software signature server a software programmer may sign the property indicator when the software programmer has provided and verified the corresponding property. With the separate software signature server the property indicator may be signed by a person different from the software programmer, e.g., a quality person.

Another object of the invention is a computer program product, comprising a digital storage medium storing a program code. The digital storage medium may comprise a compact disk, CD, a digital versatile disk, DVD, a universal serial bus, USB, stick, a hard drive, HD, a random access memory, RAM, chip, a cloud storage and the like.

According to the invention, the program code causes a computing device to carry out a method according to an embodiment of the invention as the software signature server, the software delivery server or the application server when being executed by a processor of the computing device. The program code

It is an essential advantage of the inventive method that it allows for controlling different types of handling and/or for assuring different properties of the software. The method enables a software development company to provide a high security of a developed software which is required by or at least beneficial for a client using the developed software.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows a system configured for carrying out a method according to the invention;
- Fig. 2: exemplarily shows a partial manifest file used by the system shown in fig. 1.

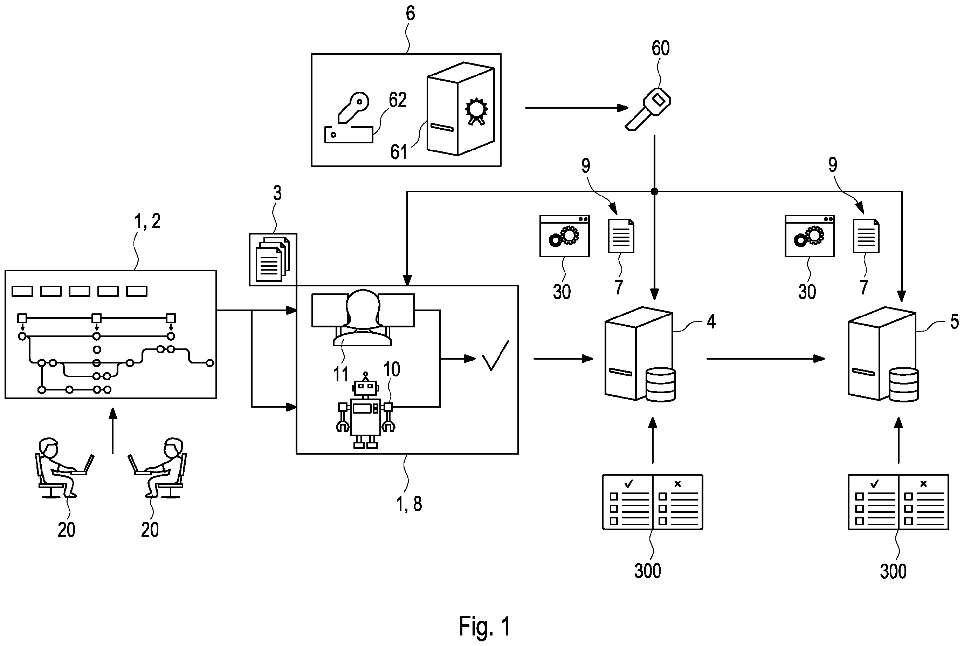

Fig. 1 schematically shows a system configured for carrying out a method according to the invention for handling a software 3. The system comprises a software signature server 1, a software delivery server 4 and a trusted entity 6. The software signature server 1 may be manually operated by a person 11 or automatically operated by an artificial neural network 10.

The system may further comprise a software development server 2 and an application server 5. The software development server 2 is used by software programmers 20.

The software signature server 1, the software delivery server 4 and the application server 5 may be implemented by means of a computer program product. The computer program product comprises a digital storage medium storing a program code. The program code causes a computing device to carry out the inventive method as the software signature server 1, the software delivery server 4 or the application server 5, respectively, when being executed by a processor of the computing device.

The system handles a software 3 as follows.

A software development server 2 or a property assurance server 8 may participate in the method as the software signature server 1.

The software signature server 1 verifies a property indicator of the developed software 3, and, upon successfully verifying the property indicator, generates a digital signature 9 of the verified property indicator by encrypting the verified property indicator with an encryption key 60.

Generating the digital signature 9 may comprise encrypting a value of a property key-value pair with the provided encryption key 60. The property key-value pair indicates the property of the developed software 3.

The encryption key 60 is created and provided by a trusted entity 6. A certificate server 61 of a certificate authority or a hardware security module, HSM, 62 may create and provide the encryption key 60 as the trusted entity 6. An asymmetric key pair comprising a public key and a private key is preferably created and provided as the encryption key 60.

The software signature server 1 assigns the generated digital signature 9 to the verified property indicator. Assigning the generated digital signature 9 may comprise providing the value of the property key-value pair 70 with a leading additional signature key-value pair 700. The leading additional signature key-value pair 70 comprises the generated digital signature 9 as a value. A development parameter, a quality parameter, a legal parameter, a secrecy level parameter, an organization parameter, a platform parameter, a runtime environment parameter and/or a location parameter may be digitally signed as the property indicator.

The software signature server 1 transmits an executable version 30 of the developed software 3 and a manifest file 7 linked to the executable version 30. A binary file, a runtime archive or a source code is preferably transmitted as the executable version 30. An eXtensible Markup Language, XML, file or a JavaScript Object Notation, JSON, file may be linked to the executable version 30 as the manifest file 7.

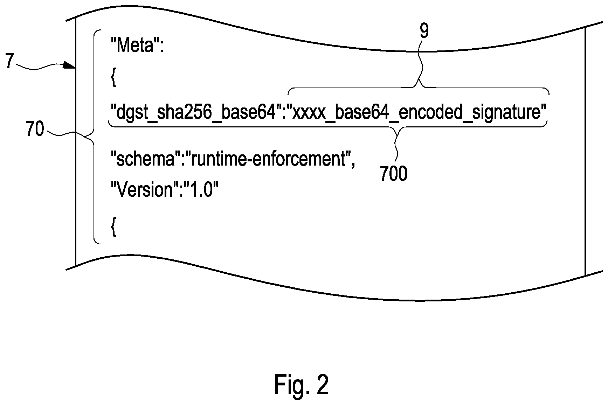

Fig. 2 exemplarily shows a partial manifest file 7 used by the system shown in fig. 1. The manifest file 7 is exemplarily coded as a JSON file.

The manifest file 7 comprises the property indicator and the assigned digital signature 9. The digital signature 9 assures a property of the developed software 3 indicated by the property indicator.

The software delivery server 4, upon reception of the transmitted manifest file 7, evaluates the manifest file 7 and handles the transmitted executable version 30 according to a software handling rule 300 depending on the property indicator and the assigned digital signature 9.

Handling the transmitted executable version 30 may comprise either restricting a delivery of the executable version 30 to a platform or rejecting a delivery of the executable version 30 when the digital signature 9 is missing or does not match the property indicator or when the property indicator is missing or unacceptable. Additionally or alternatively handling the transmitted executable version 30 may comprise providing a warning message indicating the missing digital signature 9, the property indicator not matched and/or the missing or unacceptable property indicator.

Evaluating the manifest file 7 comprises verifying a validity of the digital signature 9 and a validity of the trusted entity 6 having created and provided the digital signature 9.

Furthermore, the trusted entity 6 may provide the application server 5 with the generated encryption key 60. The software delivery server 4 may transmit the executable version 30 and the manifest file 7 to the application server 5. The application server 5, upon reception of the transmitted manifest file 7, may evaluate the manifest file 7 and handle the transmitted executable version 30 according to a software handling rule 300 depending on the property indicator and the assigned digital signature 9.

Handling the executable version 30 comprises either executing the executable version 30 or restricting an execution of the executable version 30 or rejecting an execution of the executable version 30 when the digital signature 9 is missing or does not match the property indicator or when the property indicator is missing or unacceptable. Additionally or alternatively handling the transmitted executable version 30 may comprise providing a warning message indicating the missing digital signature 9, the property indicator not matched and/or the missing or unacceptable property indicator.

Evaluating the manifest file 7 comprises verifying a validity of the digital signature 9 and a validity of the trusted entity 6 having created and provided the digital signature 9.

Advantageously, a plurality of digital signatures 9 is generated and individually assigned to a plurality of property indicators. The transmitted executable version 30 may be advantageously handled depending on a plurality of software handling rules 300.

Optionally, the application server 5 provides a signed platform token and transmits the provided platform token to the software signature server 1.The property indicator comprises the transmitted signed platform token. The signed platform token specifies a platform property.

### Reference Numerals

- 1: software signature server
- 10: artificial neural network
- 11: person
- 2: software development server
- 20: software programmer
- 3: software
- 30: executable version
- 300: software handling rule
- 4: software delivery server
- 5: software application server
- 6: trusted entity
- 60: encryption key
- 61: certificate server
- 62: hardware security module
- 7: manifest file
- 70: property key value pair
- 700: signature key-value pair
- 8: property assurance server
- 9: digital signature

## Claims

1. A method for handling a software (3), wherein
- a software signature server (1) verifies a property indicator of a developed software (3), and, upon successfully verifying the property indicator, generates a digital signature (9) of the verified property indicator by encrypting the verified property indicator with an encryption key (60) created and provided by a trusted entity (6) and assigns the generated digital signature (9) to the verified property indicator;
- the software signature server (1) transmits an executable version (30) of the developed software (3) and a manifest file (7) linked to the executable version (30), the manifest file (7) comprising the property indicator and the assigned digital signature (9) assuring a property of the developed software (3) indicated by the property indicator;
- a software delivery server (4), upon reception of the transmitted manifest file (7), evaluates the manifest file (7) and handles the transmitted executable version (30) according to a software handling rule (300) depending on the property indicator and the assigned digital signature (9).

2. The method according to claim 1, wherein generating the digital signature (9) comprises encrypting a value of a property key-value pair with the provided encryption key (60), the property key-value pair indicating the property of the developed software (3).

3. The method according to claim 2, wherein assigning the generated digital signature (9) comprises providing the value of the property key-value pair (70) with a leading additional signature key-value pair (700), the leading additional signature key-value pair (70) comprising the generated digital signature (9) as a value.

4. The method according to claim 1 to 3, wherein handling the transmitted executable version (30) comprises either restricting a delivery of the executable version (30) to a platform or rejecting a delivery of the executable version (30) when the digital signature (9) is missing or does not match the property indicator or when the property indicator is missing or unacceptable and/or providing a warning message indicating the missing digital signature (9), the property indicator not matched and/or the missing or unacceptable property indicator.

5. The method according to one of claims 1 to 4, wherein
- the trusted entity (6) provides an application server (5) with the generated encryption key (60);
- the software delivery server (4) transmits the executable version (30) and the manifest file (7) to the application server (5);
- the application server (5), upon reception of the transmitted manifest file (7), evaluates the manifest file (7) and handles the transmitted executable version (30) according to a software handling rule (300) depending on the property indicator and the assigned digital signature (9).

6. The method according to claim 5, wherein handling the executable version (30) comprises either executing the executable version (30) or restricting an execution of the executable version (30) or rejecting an execution of the executable version (30) when the digital signature (9) is missing or does not match the property indicator or when the property indicator is missing or unacceptable and/or providing a warning message indicating the missing digital signature (9), the property indicator not matched and/or the missing or unacceptable property indicator.

7. The method according to one of claims 1 to 6, wherein a development parameter, a quality parameter, a legal parameter, a secrecy level parameter, an organization parameter, a platform parameter, a runtime environment parameter and/or a location parameter is digitally signed as the property indicator.

8. The method according to one of claims 1 to 7, wherein an asymmetric key pair comprising a public key and a private key is created and provided as the encryption key (60).

9. The method according to one of claims 1 to 8, wherein a binary file, a runtime archive or a source code is transmitted as the executable version (30).

10. The method according to one of claims 1 to 9, wherein an eXtensible Markup Language, XML, file or a JavaScript Object Notation, JSON, file is linked to the executable version (30) as the manifest file (7).

11. The method according to one of claims 1 to 10, wherein evaluating the manifest file (7) comprises verifying a validity of the digital signature (9) and a validity of the trusted entity (6) having created and provided the digital signature (9).

12. The method according to one of claims 1 to 11, wherein a plurality of digital signatures (9) is generated and individually assigned to a plurality of property indicators and/or the transmitted executable version (30) is handled depending on a plurality of software handling rules (300).

13. The method according to one of claims 1 to 12, wherein the application server (5) provides a signed platform token and transmits the provided signed platform token to the software signature server (1), the property indicator comprising the transmitted signed platform token and the signed platform token specifying a platform property.

14. The method according to one of claims 1 to 13, wherein a software development server (2) or a property assurance server (8) participates as the software signature server (1) and/or a certificate server (61) of a certificate authority or a hardware security module, HSM, (62) creates and provides the encryption key (60) as the trusted entity.

15. A computer program product, comprising a digital storage medium storing a program code, the program code causing a computing device to carry out a method according to one of claims 1 to 14 as the software signature server (1), the software delivery server (4) or the application server (5) when being executed by a processor of the computing device.
